# FASCICULE DE BREVET EUROPEEN

(11) **EP 4 461 641 B1**
(45) Date de publication et mention de la délivrance du brevet: **25.06.2025**
(21) Numéro de dépôt: 24154895.7
(22) Date de dépôt: 31.01.2024
(51) Int. Cl.: B64C 27/04, B64D 31/06, F02C 9/42, B64C 27/12

(54) **PROCEDE ET DISPOSITIF D ENTREE ET DE SORTIE D'UN MODE DE FONCTIONNEMENT ECONOMIQUE POUR UN AERONEF BIMOTEUR**
VERFAHREN UND VORRICHTUNG ZUM EIN- UND AUSFAHREN EINES WIRTSCHAFTLICHEN BETRIEBSMODUS FÜR EIN ZWEIMOTORIGES LUFTFAHRZEUG
METHOD AND DEVICE FOR ENTERING AND EXITING AN ECONOMICAL OPERATING MODE FOR A TWIN-ENGINE AIRCRAFT

(30) Priorité: 09.05.2023 FR 2304589
(43) Date de publication de la demande: 13.11.2024
(73) Titulaire: Airbus Helicopters, 13725 Marignane Cedex (FR)
(72) Inventeur: GAZZINO, Marc, 13012 MARSEILLE (FR); PREVOST, Antonin, 13090 AIX EN PROVENCE (FR)
(74) Mandataire: GPI Brevets

(56) Documents cités:
- WO-A1-2022/029581
- US-A1- 2020 255 159
- US-A1- 2020 362 754
- US-A1- 2020 388 092

## Description

La présente invention se situe dans le domaine des systèmes d'assistance au pilotage d'un aéronef.

La présente invention concerne un procédé et un dispositif d'entrée et de sortie d'un mode de fonctionnement économique pour un aéronef bimoteur.

La présente invention est destinée aux aéronefs à voilure tournante munis d'au moins deux moteurs thermiques et d'au moins un rotor, les moteurs thermiques entraînant en rotation le ou les rotors respectifs de ces aéronefs.

Un tel aéronef à voilure tournante comporte au moins un rotor pouvant être entraîné en rotation par au moins deux moteurs thermiques. Les moteurs thermiques sont en outre surdimensionnés pour permettre l'entrainement du rotor avec un seul moteur, en cas de panne d'un autre moteur. Un tel aéronef comporte un mode de fonctionnement dit « total » ou *« AEO »* pour la désignation en langue anglaise « All Engines Operative » dans lequel chaque moteur thermique fournit une puissance mécanique non nulle audit au moins un rotor, les moteurs thermiques fournissant alors conjointement et de façon sensiblement symétrique la puissance mécanique requise audit au moins un rotor.

Afin de diminuer la consommation de carburant des moteurs thermiques de l'aéronef, un mode de fonctionnement dit « économique » peut être utilisé, principalement durant une phase de vol de croisière. Selon ce mode de fonctionnement économique, un seul moteur thermique est actif et fournit la puissance nécessaire pour entraîner en rotation le rotor de l'aéronef. Le ou les autres moteurs thermiques sont passifs, et ne fournissent pas de puissance mécanique significative, voire ne fournissent aucune puissance. Ce mode de fonctionnement économique est donc un fonctionnement asymétrique des moteurs thermiques, les moteurs thermiques ne fonctionnant pas de façon identique.

Un tel mode de fonctionnement économique est intéressant mais doit être employé judicieusement. En effet, le mode de fonctionnement économique peut permettre d'obtenir un gain en consommation de carburant pour réduire directement le coût du vol, son empreinte environnementale, ou pour améliorer les performances de l'aéronef en augmentant la distance franchissable par l'aéronef ou sa masse transportable. Toutefois, le mode de fonctionnement économique peut être limité à un certain domaine de vol, d'une part pour que la sécurité du vol soit toujours assurée, et d'autre part pour que l'installation motrice fournisse la puissance requise pour la phase de vol courante.

Par exemple, le mode de fonctionnement économique doit être engagé avec une hauteur de sécurité minimale par rapport au sol survolé afin de permettre, en cas de panne du moteur entraînant le rotor, de réactiver un autre moteur.

Selon un autre exemple, lors de phases de vol d'avancement à grande vitesse, l'aéronef nécessite une puissance motrice importante que ne peut pas fournir le mode de fonctionnement économique sans risque d'un endommagement spécifique du moteur thermique et/ou de la chaîne de transmission mécanique, cet endommagement étant susceptible d'engendrer alors des coûts de maintenance supplémentaires.

En outre, le mode de fonctionnement économique entraîne une réduction de la vitesse de l'aéronef augmentant en conséquence le temps de vol et, par suite, le coût opérationnel de ce vol.

Dans ces cas, les coûts induits par le temps de vol augmenté et/ou par les coûts de maintenance supplémentaires peuvent s'avérer supérieurs au gain obtenu par la baisse de consommation de carburant ou l'amélioration des performances de l'aéronef.

Selon un autre exemple, selon les conditions opérationnelles de l'aéronef, telles que le vent, la température extérieure ou encore l'altitude, les performances d'un moteur thermique fluctuent. Ces conditions peuvent exercer une influence sur la puissance développée par le moteur thermique et/ou sa consommation de carburant. De fait, l'utilisation du mode de fonctionnement économique peut s'avérer moins économique dans ces conditions qu'un mode de fonctionnement traditionnel des moteurs thermiques en vol, voire impossible.

Dès lors, choisir d'utiliser ou non un tel mode de fonctionnement économique s'avère être un problème technique complexe, tant vis-à-vis des enjeux de sécurité que des enjeux économiques pour l'opérateur de l'aéronef.

Les documents US 2020/0362754, EP 3738888 et WO 2022/029581 décrivent la gestion d'un mode de fonctionnement économique pour un giravion muni de plusieurs moteurs thermiques. Selon ces documents, dans ce mode de fonctionnement économique, au moins un des moteurs est un moteur actif fournissant la puissance motrice nécessaire au giravion et au moins un autre moteur est en veille fournissant une faible puissance motrice au giravion, voire aucune puissance motrice.

Selon les documents US 2020/0362754 et EP 3738888, le moteur en veille peut éventuellement être au ralenti, voire à une vitesse de rotation inférieure au ralenti. Pour l'entrée ou la sortie de ce mode de fonctionnement économique, divers paramètres de fonctionnement des moteurs et/ou du rotor du giravion doivent se trouver soit dans des intervalles prédéterminés, soit en dessous ou au-dessus de seuils prédéterminés. En outre, en cas de besoin d'une puissance supplémentaire ou en cas de baisse de la puissance fournie par le moteur actif, suite à une panne par exemple, le moteur en veille peut fournir une puissance supplémentaire, voire sa pleine puissance.

Le document WO 2022/029581 décrit des conditions de passage entre un mode de fonctionnement AEO et le mode de fonctionnement économique. Le mode de fonctionnement économique est utilisable dans un domaine de vol limité de l'aéronef, notamment lorsqu'il se trouve dans une zone exempte d'obstacles ou de restrictions de vol. La vitesse d'avancement de l'aéronef et la vitesse de rotation de son rotor doivent être comprises dans des intervalles déterminés. L'altitude et la hauteur de l'aéronef par rapport au sol ainsi que le couple délivré par les moteurs sont également influents pour autoriser le mode de fonctionnement économique. L'état de fonctionnement et/ou la présence d'une panne des systèmes et équipements de l'aéronef sont également pris en compte pour autoriser le mode de fonctionnement économique.

Les documents US 2020/0388092, US 2020/0255159 et WO 2022/029581 décrivent un fonctionnement asymétrique d'aéronefs muni d'au moins deux moteurs entraînant un ou plusieurs rotors, dans lequel au moins un premier moteur fonctionne en mode actif pour fournir une puissance motrice aux rotors et au moins un deuxième moteur fonctionne en mode veille pour ne fournir aucune puissance motrice aux rotors.

Selon le document US 2020/0388092, l'entrée dans le fonctionnement asymétrique peut être effectuée suite à une demande d'un opérateur ou automatiquement. Pendant le fonctionnement asymétrique, si l'aéronef a besoin d'une augmentation de puissance, le deuxième moteur peut être amené à fournir plus de puissance par rapport au mode veille, et éventuellement revenir immédiatement à une puissance élevée.

Diverses informations sur le fonctionnement de l'aéronef peuvent être affichées à l'intention d'un pilote, par exemple une puissance de sortie des moteurs ainsi qu'un indicateur d'une plage cible.

Selon le document US 2020/0255159, suite à réception d'une confirmation de disponibilité d'un moteur pour le fonctionnement asymétrique et en fonction d'un ensemble de paramètres moteur de l'aéronef, un message de disponibilité est émis vers un cockpit de l'aéronef. Puis à réception d'une demande initiée par le pilote pour utiliser ce fonctionnement asymétrique, les moteurs sont commandés pour fonctionner dans le fonctionnement asymétrique. Lorsqu'un ou plusieurs de ces paramètres ne répondent plus aux conditions de fonctionnement asymétrique, celui-ci est désactivé.

Selon le document WO 2022/029581, une détection de paramètres associés aux conditions de fonctionnement de l'aéronef est réalisée, ces paramètres comprenant des paramètres significatifs du comportement des moteurs ainsi que les positions des commandes imposées par le pilote aux rotors. Ensuite, la transition de l'aéronef de la première configuration à la seconde configuration est effectuée lorsque les paramètres prennent des valeurs prédéterminées. En mode veille, le second moteur n'est pas arrêté, mais entraîne un arbre de sortie en rotation sans fournir de puissance moteur à cet arbre de sortie. Des séries de messages sont affichés à destination de l'équipage pour indiquer si les conditions requises sont atteintes ou contraire non respectées.

La présente invention a alors pour but de proposer un procédé et un système alternatifs pour commander la mise en œuvre d'un tel mode de fonctionnement économique pour optimiser et sécuriser l'utilisation de ce mode de fonctionnement économique.

La présente invention vise ainsi un procédé et un système de commande du mode de fonctionnement économique pour un aéronef comportant au moins deux moteurs thermiques pour gérer l'entrée et la sortie de ce mode de fonctionnement économique durant un vol.

Tout d'abord, la présente invention concerne un procédé de commande d'un mode de fonctionnement économique pour un aéronef muni d'au moins un rotor, et d'au moins deux moteurs thermiques entraînant en rotation ledit au moins un rotor, l'aéronef possédant un régulateur configuré pour réguler les moteurs thermiques selon au moins le mode de fonctionnement économique dans lequel au moins un moteur actif parmi les moteurs thermiques fournit une puissance mécanique non nulle audit au moins un rotor et au moins un moteur passif parmi les moteurs thermiques ne fournit pas de puissance mécanique audit au moins un rotor. Le procédé comporte les étapes suivantes :
- mesure à l'aide de capteurs de paramètres de fonctionnement de l'aéronef,
- comparaison à l'aide d'un calculateur des paramètres de fonctionnement de l'aéronef avec des limitations sécuritaires et des limitations fonctionnelles relatives au mode de fonctionnement économique,
- si l'aéronef est dans le mode de fonctionnement économique et qu'au moins une des limitations fonctionnelles n'est pas respectée et que lesdites limitations sécuritaires sont respectées, émission d'une alerte de dépassement des limitations fonctionnelles du mode de fonctionnement économique, et
- si l'aéronef est dans le mode de fonctionnement économique et qu'au moins une des limitations sécuritaires n'est pas respectée, désengagement du mode de fonctionnement économique, le désengagement comportant une activation dudit au moins un moteur passif à l'aide du régulateur.

Le procédé selon l'invention permet ainsi de gérer les sorties du mode de fonctionnement économique durant le vol de l'aéronef, afin de sécuriser le vol de l'aéronef et l'utilisation de ce mode de fonctionnement économique.

Le procédé selon l'invention permet ainsi avantageusement d'assister le pilote de l'aéronef dans la gestion de l'utilisation de ce mode de fonctionnement économique durant le vol.

En effet, ce mode de fonctionnement économique est à employer dans un domaine de vol limité, propre à ce mode de fonctionnement économique, susceptible de rendre son emploi complexe, voire contre-productif d'un point de vue économique.

Dans ce but, ce procédé permet de comparer des paramètres de fonctionnement de l'aéronef avec les limitations sécuritaires et fonctionnelles caractérisant le domaine de vol limité de l'aéronef dans le mode de fonctionnement économique. Au moins un paramètre de fonctionnement est comparé avec une limitation fonctionnelle et au moins un paramètre de fonctionnement est comparé à une limitation sécuritaire.

Les paramètres de fonctionnement de l'aéronef permettent notamment de définir un état courant du fonctionnement de l'aéronef et de ses équipements, par exemple de son installation motrice et de ses rotors, ainsi que des caractéristiques courantes de son vol. Les paramètres de fonctionnement de l'aéronef peuvent également comporter des paramètres météorologiques.

Les limitations du mode de fonctionnement économique sont de deux niveaux et comportent des limitations fonctionnelles et des limitations sécuritaires. Les limitations sécuritaires ont un effet direct sur la sécurité du vol de l'aéronef. Le respect de ces limitations sécuritaires est donc indispensable, pour éviter de mettre l'aéronef dans une position à risque. Les limitations fonctionnelles ont un effet sur le fonctionnement de l'aéronef ou sur l'efficacité du mode de fonctionnement économique. Le non-respect d'une ou de plusieurs limitations fonctionnelles entraîne, par exemple, la perte d'une fonction non sécuritaire de l'aéronef et/ou peut avoir pour conséquence l'absence de gain, éventuellement en termes de consommation de carburant et/ou financiers.

Ainsi, lorsque l'aéronef applique le mode de fonctionnement économique, dès qu'au moins une des limitations fonctionnelles n'est pas respectée par un des paramètres de fonctionnement de l'aéronef alors que simultanément toutes les limitations sécuritaires sont respectées, une alerte de dépassement des limitations fonctionnelles du mode de fonctionnement économique est émise.

Cette alerte de dépassement des limitations fonctionnelles peut être émise sous forme d'un affichage d'un message sur un dispositif d'affichage de l'aéronef. Par exemple, le message affiché comporte une information relative audit au moins un paramètre de vol et de fonctionnement ne respectant pas la limitation fonctionnelle associée afin d'en informer le pilote de l'aéronef.

Le non-respect d'une limitation fonctionnelle peut indiquer que l'utilisation du mode de fonctionnement économique n'est pas optimisée et/ou que la marge du paramètre concernée vis-à-vis d'une limitation sécuritaire se réduit. Le pilote peut alors agir sur des commandes, immédiatement ou suite à la réalisation de la manœuvre en cours, pour respecter de nouveau les limitations fonctionnelles.

Par ailleurs, dès qu'une limitation sécuritaire n'est pas respectée, indépendamment du respect des limitations fonctionnelles, un désengagement du mode de fonctionnement économique est automatiquement réalisé afin de placer l'aéronef dans un domaine de vol sécurisé. Au cours de ce désengagement du mode de fonctionnement économique, une activation du ou des moteurs passifs est effectuée automatiquement à l'aide du régulateur par sécurité.

Une activation d'un moteur passif peut consister en un démarrage d'un tel moteur passif s'il était arrêté et non alimenté en carburant. Une activation d'un moteur passif peut consister en une accélération de ce moteur passif s'il était démarré, mais par exemple à un régime de ralenti.

Dans tous les cas, une activation d'un moteur passif lui permet de fournir une puissance mécanique non nulle pour entraîner en rotation ledit au moins un rotor.

De la sorte, le procédé selon l'invention permet avantageusement, lors d'une phase de vol mettant en œuvre le mode de fonctionnement économique, d'une part d'avertir le pilote en cas de non-respect d'au moins une limitation fonctionnelle pour lui laisser la possibilité d'optimiser le fonctionnement de l'aéronef, et d'autre part de sortir automatiquement de ce mode de fonctionnement économique en cas de non-respect d'au moins une limitation sécuritaire afin de poursuivre le vol en sécurité.

Le procédé de commande d'un mode de fonctionnement économique selon l'invention peut de plus comprendre une ou plusieurs des caractéristiques qui suivent, prises seules ou en l'combinaison, dans la mesure où elles entrent dans le cadre des revendications.

Selon une autre possibilité compatible avec les précédentes, le procédé peut comporter un démarrage normal et un démarrage accéléré du ou des moteurs passifs dans le mode de fonctionnement économique afin de désengager ce mode de fonctionnement économique et en sortir de, ce ou ces moteurs thermiques étant alors capables de fournir une puissance mécanique non nulle au rotor.

Le démarrage normal et le démarrage accéléré peuvent être appliqués aussi bien à un moteur passif à l'arrêt et non alimenté en carburant, qu'à un moteur passif démarré, par exemple à un régime de ralenti.

Le démarrage normal peut, par exemple, comporter une première accélération dite « normale » appliquée à un moteur passif, la première accélération étant effectuée pendant une première durée jusqu'à ce que ce ou ces moteurs thermiques fournissent une puissance mécanique non nulle au rotor, voire la puissance requise pour ce moteur thermique.

Le démarrage accéléré peut, par exemple, comporter une seconde accélération dite « courte » appliquée à un moteur passif, la seconde accélération étant effectuée pendant une seconde durée jusqu'à ce que ce ou ces moteurs thermiques fournissent une puissance mécanique non nulle au rotor, voire la puissance requise pour ce moteur thermique. La seconde durée est inférieure à la première durée. Le démarrage accéléré permet ainsi avantageusement de démarrer plus rapidement le ou les moteurs passifs concernés que le démarrage normal.

Le démarrage normal peut être effectué suite à l'émission d'une alerte de dépassement des limitations fonctionnelles du mode de fonctionnement économique, si un pilote de l'aéronef commande une sortie du mode de fonctionnement économique à l'aide d'une interface homme-machine.

Le démarrage accéléré peut être effectué suite au non-respect d'au moins une limitation sécuritaire, lors du désengagement du mode de fonctionnement économique, et plus précisément pour l'activation de chaque moteur passif.

Selon une autre possibilité compatible avec les précédentes, les paramètres de fonctionnement de l'aéronef peuvent comporter plusieurs paramètres dont :
- des paramètres de propulsion relatifs à un ensemble de l'aéronef, l'ensemble comportant les moteurs thermiques, ledit au moins un rotor, et une chaîne de transmission mécanique reliant mécaniquement les moteurs thermiques et ledit au moins un rotor ; les paramètres de propulsion sont choisis parmi par exemple des couples, des vitesses de rotation au niveau d'organes tournants des moteurs thermiques, un couple et une vitesse de rotation d'un mât dudit au moins un rotor, et des couples, des vitesses de rotation au niveau d'organes tournants de la chaîne de transmission mécanique, des marges par rapport aux performances des moteurs thermiques et en particulier par rapport à la puissance disponible, des températures internes des moteurs thermiques, des compteurs dits « moteur » associés aux moteurs thermiques, chaque compteur moteur comptabilisant une donnée d'usage d'un des moteurs thermiques, et des compteurs dits « transmission » associés respectivement à des arbres de la chaîne de transmission mécanique reliés mécaniquement respectivement aux moteurs thermiques, chaque compteur transmission comptabilisant une donnée d'usage d'un des arbres,
- des paramètres de vol de l'aéronef choisis parmi une vitesse d'avancement, une vitesse ascensionnelle, une altitude, une attitude, une hauteur par rapport au sol survolé,
- des paramètres opérationnels de l'aéronef, les paramètres opérationnels étant choisis parmi par exemple des valeurs commandées de pas de pales dudit au moins un rotor, une vitesse d'avancement acceptable dans le mode de fonctionnement économique, un état d'un équipement, tel qu'un moteur électrique, un démarreur ou un démarreurgénérateur relié à un des moteurs thermiques, ou encore une batterie électrique, un état d'un équipement comportant un état « de fonctionnement normal », un état « arrêté », un état « présence d'un dysfonctionnement » relatif à cet équipement, et
- des paramètres d'environnement relatifs à des conditions de trafic autour de l'aéronef et à des conditions météorologiques comprenant par exemple une température extérieure et une pression atmosphérique extérieures à l'aéronef, la présence d'un vent fort, de pluie ou de neige, ou encore les conditions de visibilité.

Les données d'usage relatives à un moteur thermique permettent de caractériser l'utilisation et/ou l'endommagement de ce moteur thermique. Un compteur moteur peut, par exemple, comptabiliser les heures de fonctionnement du moteur thermique, l'endofluage qu'il a subi, ainsi que les nombres de cycles d'un générateur de gaz et d'une turbine libre d'un turbomoteur.

Les données d'usage relatives à un arbre d'entrée de la chaîne de transmission mécanique permettent de caractériser l'utilisation et/ou l'endommagement de cet arbre d'entrée. Un compteur transmission peut, par exemple, comptabiliser le nombre de cycles ou le nombre d'heures de fonctionnement d'un arbre d'entrée ou encore une durée d'utilisation de cet arbre d'entrée dans le mode de fonctionnement économique.

De plus, les limitations sécuritaires et fonctionnelles peuvent comporter au moins une limitation de propulsion relative à au moins un paramètre de propulsion, au moins une limitation de vol relative à au moins un paramètre de vol, au moins une limitation opérationnelle relative à au moins un paramètre opérationnel et au moins une limitation d'environnement relative à au moins un paramètre environnement.

L'ensemble de ces limitations sécuritaires et fonctionnelles forment ainsi le domaine limité autorisé relatif au mode de fonctionnement économique.

Une limitation sécuritaire et fonctionnelle peut comporter un seuil supérieur, un paramètre de fonctionnement respectant cette limitation si la valeur de ce paramètre est inférieure à ce seuil supérieur.

Une limitation sécuritaire et fonctionnelle peut comporter un seuil inférieur, un paramètre de fonctionnement respectant cette limitation si la valeur de ce paramètre est supérieure à ce seuil inférieur.

Une limitation sécuritaire et fonctionnelle peut comporter un intervalle dans lequel la valeur du paramètre de vol et de fonctionnement doit se situer pour respecter cette limitation.

Une limitation sécuritaire et fonctionnelle peut encore être associée à un paramètre de fonctionnement dit « d'état ». Un tel paramètre d'état est susceptible de prendre au moins deux valeurs distinctes. Une telle limitation est par exemple respectée lorsque le paramètre d'état est dans un premier état et non respectée lorsque le paramètre est dans un second état. Un paramètre d'état peut par exemple caractériser un état de fonctionnement d'un équipement et comporter un état « de fonctionnement normal », un état « arrêté » ou un état « présence d'un dysfonctionnement » relatif à cet équipement.

Par ailleurs, certaines de ces limitations qu'elles soient sécuritaires ou fonctionnelles peuvent comporter des seuils d'hystérésis afin d'éviter des engagements et désengagements successifs et intempestifs du mode de fonctionnement économique.

Par exemple, une limitation sécuritaire ou fonctionnelle peut comporter un seuil inférieur d'hystérésis muni d'un premier seuil et d'un second seuil, le second seuil étant supérieur au premier seuil. Cette limitation est ainsi considérée comme étant respectée tant que la valeur du paramètre de fonctionnement est supérieure au second seuil. La valeur du paramètre est également supérieure au premier seuil dans ce cas. Cette limitation est également considérée comme étant respectée lorsque la valeur du paramètre de fonctionnement devient inférieure au second seuil en restant supérieure au premier seuil.

Dès que la valeur du paramètre est inférieure au premier seuil et au second seuil, la limitation est considérée comme n'étant pas respectée et reste considérée comme n'étant pas respectée tant que la valeur du paramètre est inférieure au second seuil, donc y compris une fois que la valeur du paramètre est supérieure au premier seuil. La limitation est de nouveau considérée comme étant respectée dès que la valeur du paramètre est supérieure au second seuil, et donc supérieure également au premier seuil.

Selon une autre possibilité compatible avec les précédentes, si l'aéronef n'est pas dans le mode de fonctionnement économique et que les limitations fonctionnelles et sécuritaires sont respectées par les paramètres de fonctionnement, le procédé peut comporter une émission d'une information relative à une disponibilité du mode de fonctionnement économique. Cette information permet d'informer le pilote de l'aéronef que les limitations fonctionnelles et sécuritaires relatives au mode de fonctionnement économique sont respectées et que l'aéronef peut donc utiliser ce mode de fonctionnement économique sans risque et de façon efficace pour réduire la consommation de carburant, et par suite le coût opérationnel du vol.

Suite à l'émission de cette information, le pilote peut alors décider, via une interface homme-machine, de commander l'engagement du mode de fonctionnement automatique.

Cette émission d'une information relative à une disponibilité du mode de fonctionnement économique peut comporter l'affichage d'un message sur un dispositif d'affichage de l'aéronef, l'émission d'un son à l'aide d'un haut-parleur ou l'émission d'une vibration à l'aide d'un dispositif haptique.

De façon alternative, si l'aéronef n'est pas en mode de fonctionnement économique et que les limitations fonctionnelles et sécuritaires sont respectées par les paramètres de fonctionnement, le procédé peut comporter un engagement du mode de fonctionnement économique. Cet engagement du mode de fonctionnement économique est par exemple effectué automatiquement si le pilote a préalablement sélectionné une telle possibilité via une interface homme-machine adaptée.

L'étape d'engagement du mode de fonctionnement économique peut comporter une première régulation d'au moins un des moteurs thermiques à l'aide du régulateur de sorte qu'il soit un moteur actif et fournisse la puissance mécanique requise audit au moins un rotor, et une seconde régulation d'au moins un autre des moteurs thermiques à l'aide du régulateur afin qu'il soit un moteur passif, ne fournissant aucune puissance mécanique audit au moins un rotor. La seconde régulation comporte par exemple un arrêt ou une mise au ralenti d'un ou des autres moteurs thermiques à l'aide du régulateur.

De plus, le calculateur peut déterminer quel moteur thermique peut ou doit être un moteur actif et quel moteur thermique peut ou doit être un moteur passif parmi les moteurs thermiques pour le mode de fonctionnement économique. Le calculateur transmet alors au régulateur des informations relatives au moteur actif pour la première régulation et au moteur passif pour la seconde régulation.

Cette information peut, par exemple, permettre d'alterner plusieurs moteurs actifs sur plusieurs vols successifs, voire sur un même vol afin d'équilibrer la durée d'utilisation et d'endommagements des moteurs thermiques ainsi que des arbres d'entrée associés d'une boîte de transmission mécanique de puissance à laquelle est relié chaque moteur thermique. Cette information peut être déterminée en fonction des paramètres de propulsion relatifs à l'ensemble de l'aéronef, et en particulier des données d'usage relatives aux moteurs thermiques et à la chaîne de transmission mécanique fournies respectivement par les compteurs moteurs et par les compteurs transmission. En conséquence, la maintenance des moteurs thermiques et de la chaîne de transmission mécanique peut être optimisée, la maintenance des deux moteurs pouvant par exemple être effectuée simultanément.

Cette information peut en particulier être utilisée lors de l'étape d'engagement du mode de fonctionnement économique afin de définir à quels moteurs thermiques doivent respectivement être appliquer la première régulation et la seconde régulation.

Selon une autre possibilité compatible avec les précédentes, le procédé peut comporter une étape d'affichage à l'aide d'un dispositif de visualisation, tel un écran, afin d'afficher un ou plusieurs paramètres de fonctionnement et les limitations fonctionnelles et sécuritaires associées. De la sorte, le pilote de l'aéronef peut visualiser en permanence une information relative à la position de ces paramètres par rapport à leurs limitations respectives, et décider s'il peut utiliser ou non le mode de fonctionnement économique.

Selon une autre possibilité compatible avec les précédentes, le régulateur peut comporter autant de contrôleurs moteur que l'aéronef comporte de moteurs thermiques, chaque contrôleur moteur étant dédié à un seul moteur thermique afin de gérer, réguler et surveiller son fonctionnement. Chaque contrôleur moteur permet par exemple de stocker dans une mémoire les compteurs moteurs d'un moteur thermique et les incrémenter lors du fonctionnement des moteurs thermiques.

Un tel contrôleur moteur est par exemple de type *EECU* pour la désignation en langue anglaise « Electronic Engine Control Unit » voire peut faire partie d'un système de type *FADEC* pour la désignation en langue anglaise « Full Authority Digital Engine Control ».

Selon une autre possibilité compatible avec les précédentes, le mode de fonctionnement économique peut comporter un premier mode de fonctionnement, pour lequel le moteur passif est arrêté et non alimenté en carburant, et un second mode de fonctionnement, pour lequel le moteur passif est démarré et alimenté en carburant, sans fournir de puissance mécanique audit au moins un rotor.

Un aéronef peut disposer des deux modes de fonctionnement économique ou d'un seul de ces deux modes de fonctionnement économique.

En outre, certaines limitations, qu'elles soient fonctionnelles ou sécuritaires peuvent être différentes pour le premier mode de fonctionnement et le second mode de fonctionnement.

Ainsi, au moins une des limitations fonctionnelles peut comporter une première limitation fonctionnelle relative au premier mode de fonctionnement et une seconde limitation fonctionnelle relative au second mode de fonctionnement, la première limitation fonctionnelle et la seconde limitation fonctionnelle étant alors associées à un même paramètre de fonctionnement. De même, au moins une des limitations sécuritaires peut comporter une première limitation sécuritaire relative au premier mode de fonctionnement et une seconde limitation sécuritaire relative au second mode de fonctionnement, la première limitation sécuritaire et la seconde limitation sécuritaire étant alors associées à un même paramètre de fonctionnement.

Si l'aéronef est dans le premier mode de fonctionnement et qu'au moins une des premières limitations fonctionnelles n'est pas respectée et que les secondes limitations fonctionnelles sont respectées, les premières et les secondes limitations sécuritaires étant respectées, une étape d'émission d'une alerte de dépassement des premières limitations fonctionnelles peut être réalisée. Cette alerte peut être visuelle, avec l'affichage d'un message informant le pilote du paramètre de fonctionnement ne respectant pas la première limitation fonctionnelle, sonore, ou haptique.

Dans ces conditions, de façon alternative ou complémentaire, une étape d'engagement du second mode de fonctionnement peut être réalisée automatiquement si une interface homme-machine est actionnée ou a été préalablement actionnée par un pilote de l'aéronef. Cette étape d'engagement peut comporter un démarrage du ou des moteurs passifs arrêtés dans ce premier mode de fonctionnement, sans qu'il fournisse de puissance mécanique audit au moins un rotor. Cette étape de démarrage est effectuée à l'aide du régulateur.

Si l'aéronef est dans le premier mode de fonctionnement et qu'au moins une des premières limitations sécuritaires n'est pas respectée et que les secondes limitations sécuritaires sont respectées, une étape d'engagement du second mode de fonctionnement peut être réalisée automatiquement. Cette étape d'engagement peut comporter un démarrage du ou des moteurs passifs arrêté dans ce premier mode de fonctionnement, sans qu'il fournisse de puissance mécanique audit au moins un rotor. Cette étape de démarrage est effectuée à l'aide du régulateur.

La première durée relative au démarrage normal précité peut être différente pour le premier mode de fonctionnement et pour le second mode de fonctionnement. Cette première durée est par exemple plus importante pour le premier mode de fonctionnement que pour le second mode de fonctionnement. La première durée peut être égale à 30 secondes pour le premier mode de fonctionnement et 20 secondes pour le second mode de fonctionnement.

De même, la seconde durée relative au démarrage accéléré précité peut être différente pour le premier mode de fonctionnement et pour le second mode de fonctionnement. Cette seconde durée est par exemple plus importante pour le premier mode de fonctionnement que pour le second mode de fonctionnement. La seconde durée peut être égale à 10 secondes pour le premier mode de fonctionnement et 5 secondes pour le second mode de fonctionnement.

La présente invention vise aussi un programme d'ordinateur comprenant des instructions qui, lorsque le programme est exécuté, conduisent à mettre en œuvre le procédé selon l'invention précédemment décrit. Le programme est par exemple exécuté par un ordinateur ou un calculateur embarqué dans l'aéronef, comprenant au moins un processeur, au moins un circuit intégré, au moins un système programmable, au moins un circuit logique, et une mémoire, ces exemples ne limitant pas la portée donnée à l'expression « ordinateur » ou « calculateur ».

La mémoire permet de stocker le programme d'ordinateur ainsi que différentes informations utilisées par le programme d'ordinateur, à savoir les limitations sécuritaires et fonctionnelles, ainsi que des paramètres de fonctionnement de l'aéronef, par exemple les paramètres météorologiques.

La présente invention vise également un système de commande d'un mode de fonctionnement économique pour un aéronef muni d'au moins un rotor, et d'au moins deux moteurs thermiques entraînant en rotation ledit au moins un rotor, l'aéronef possédant un régulateur configuré pour réguler les moteurs thermiques selon un mode de fonctionnement économique dans lequel au moins un moteur actif parmi les moteurs thermiques fournit une puissance mécanique audit au moins un rotor et au moins un moteur passif parmi les autres moteurs thermiques ne fournit pas de puissance mécanique audit au moins un rotor. Ce système de commande comporte au moins un calculateur, et au moins une mémoire stockant des instructions. Le système de commande d'un mode de fonctionnement économique est relié au régulateur des moteurs thermiques et est configuré pour mettre en œuvre le procédé précédemment décrit à l'aide de ces instructions.

Le système de commande est embarqué dans l'aéronef et est relié au régulateur des moteurs thermiques, par une liaison sans fil ou par une liaison filaire. Le système de commande peut comporter un dispositif de visualisation, tel un écran, afin d'afficher notamment un message d'alerte.

La présente invention vise enfin un aéronef comportant un tel système de commande.

L'invention et ses avantages apparaîtront avec plus de détails dans le cadre de la description qui suit avec des exemples donnés à titre illustratif en référence aux figures annexées qui représentent :
- la figure 1, un aéronef muni d'un système de commande d'un mode de fonctionnement économique, et
- la figure 2, un schéma synoptique d'un procédé de commande d'un mode de fonctionnement économique pour aéronef.

Les éléments présents dans plusieurs figures distinctes sont affectés d'une seule et même référence.

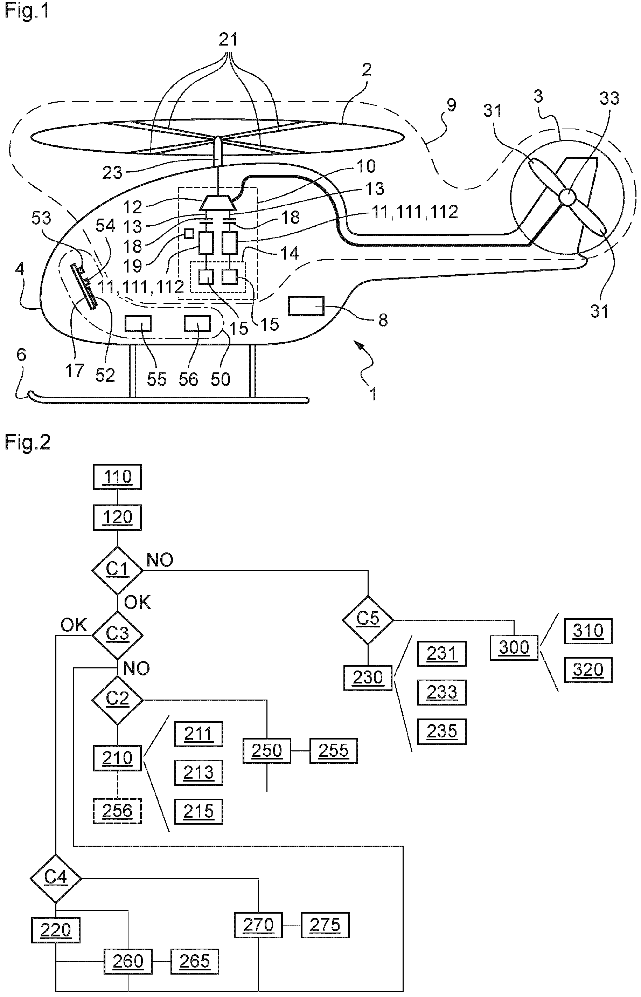

Un aéronef 1 est représenté sur la figure 1. L'aéronef 1 représenté est un aéronef à voilure tournante comportant un fuselage 4, un train d'atterrissage 6, une installation motrice 10 et au moins un rotor 2,3 entraîné en rotation par l'installation motrice 10. Sur l'exemple représenté, l'aéronef 1 comporte deux rotors 2,3, à savoir un rotor principal 2 agencé au-dessus du fuselage 4 et un rotor arrière 3 agencé sur une poutre de queue de l'aéronef 1. L'installation motrice 10 et les rotors 2,3 forment un ensemble 9 permettant de provoquer les déplacements de l'aéronef 1.

L'installation motrice 10 comporte au moins deux moteurs thermiques 11, un régulateur 14 régulant le fonctionnement des moteurs thermiques 11 ainsi qu'une chaîne de transmission mécanique agencée entre les moteurs thermiques 11 et les rotors 2,3. Cette chaîne de transmission mécanique est munie notamment d'une boîte de transmission mécanique de puissance 12. La boîte de transmission mécanique de puissance 12 comporte des arbres 13 d'entrée reliés mécaniquement chacun et distinctivement à un des moteurs thermiques 11, par exemple par l'intermédiaire d'une roue libre. L'exemple d'installation motrice 10 représenté sur la figure 1 comporte deux moteurs thermiques 11 bien qu'une telle installation motrice 10 puisse comporter au moins trois moteurs thermiques 11.

Le régulateur 14 peut, par exemple, comporter autant de contrôleurs moteur 15 que l'installation motrice 10 comporte de moteurs thermiques 11. Chaque contrôleur moteur 15 est relié à un moteur thermique 11 respectif, et peut piloter et surveiller le fonctionnement de ce moteur thermique 11. Chaque contrôleur moteur 15 permet, par l'intermédiaire de capteurs agencés sur le moteur thermique 11, de mesurer des paramètres de propulsion relatifs au moteur thermiques 11, tels que des couples et des vitesses de rotation au niveau d'organes tournants de ce moteur thermique 11, des températures internes de ce moteur thermique 11, par exemple d'une chambre de combustion ou de sortie d'un compresseur, ainsi que des marges par rapport aux performances du moteur thermique 11, et en particulier par rapport à la puissance réellement disponible pour le moteur thermique 11.

Les paramètres de propulsion comportent aussi des données d'usages de ces moteurs thermiques 11. Les données d'usage de chaque moteur thermique 11, par exemple sa durée de fonctionnement ou le nombre de cycles effectués, sont comptabilisées par un compteur moteur. Les paramètres de propulsion peuvent être stockés dans une mémoire du contrôleur moteur 15.

L'ensemble 9 peut comporter d'autres capteurs, non représentés sur la figure 1 par souci de clarté, afin de mesurer des paramètres de propulsion relatifs aux rotors 2,3, et à la chaîne de transmission mécanique, en particulier à la boîte de transmission mécanique de puissance 12. Ces paramètres de propulsion comportent alors des couples et des vitesses de rotation au niveau de mâts 23,33 respectifs des rotors 2,3, mesurés par exemple à l'aide de couple mètres et de tachymètres, des couples et des vitesses de rotation d'organes tournants de la chaîne de transmission mécanique, par exemple au niveau des arbres d'entrée 13, mesurés par exemple à l'aide de couplemètres et de tachymètres, ainsi que des données d'usage des arbres d'entrée 13. Les données d'usage de chaque arbre d'entrée 13, par exemple sa durée de fonctionnement ou le nombre de cycles effectués, sont comptabilisées par un compteur transmission. Ces paramètres de propulsion relatifs aux rotors 2,3, et à la chaîne de transmission mécanique peuvent être stockés dans une mémoire 19 de l'installation motrice 10.

Alternativement, les paramètres de propulsion peuvent être stockés dans une mémoire dédiée ou dans une mémoire d'un système avionique 8 de l'aéronef 1.

Ce système avionique 8 peut comporter ou être relié à plusieurs capteurs afin de mesurer des paramètres de fonctionnement de l'aéronef 1. Ces paramètres de fonctionnement comportent des paramètres de vol relatifs à l'aéronef 1, tels que sa vitesse d'avancement, sa vitesse ascensionnelle, son altitude, son attitude et/ou sa hauteur par rapport au sol survolé, par exemple. Ces paramètres de vol de l'aéronef 1 peuvent par exemple être mesurés à l'aide de tachymètres, accéléromètres, d'une centrale inertielle, d'un altimètre barométrique ou d'une radiosonde.

Ces paramètres de fonctionnement peuvent également comporter des paramètres opérationnels de l'aéronef 1. Ces paramètres opérationnels peuvent comporter des valeurs commandées de pas de pales 21, 31 des rotors 2,3, ou une vitesse d'avancement acceptable par l'aéronef 1 dans le mode de fonctionnement économique. Une telle vitesse d'avancement acceptable est déterminée en fonction de la puissance réellement disponible pour chaque moteur thermique 11. Cette vitesse d'avancement acceptable peut donc être différente en fonction du moteur thermique 11 utilisé.

Ces paramètres opérationnels peuvent également comporter un état d'équipements de l'aéronef 1. Un tel état caractérise si chaque équipement est en état normal ou nominal de fonctionnement ou non, par exemple dans un mode normal ou nominal, à savoir sans panne ni dysfonctionnement et avec des performances nominales, dans un mode dégradé, à savoir avec des performances limitées, ou en panne. De tels équipements de l'aéronef 1 peuvent comporter, par exemple, un moteur électrique, un démarreur ou un démarreurgénérateur relié à un moteur thermique 11, ou encore une batterie électrique.

Enfin, ces paramètres de fonctionnement peuvent comporter des paramètres d'environnement comprenant des conditions de trafic autour de l'aéronef et des conditions météorologiques. Les conditions de trafic comprennent, par exemple, un état du trafic pour définir s'il est important ou non par exemple si le nombre d'aéronefs évoluant autour de l'aéronef 1 est supérieur à un nombre prédéterminé. Les conditions météorologiques comprennent, par exemple, des valeurs d'une température extérieure et d'une pression atmosphérique extérieure dans un milieu situé à l'extérieur de l'aéronef 1 mesurées. Les conditions météorologiques peuvent comprendre une valeur de la vitesse du vent, un état caractérisant la présence de pluie ou de neige, ou encore un état caractérisant les conditions de visibilité, par exemple bonnes ou dégradées.

L'installation motrice 10 peut mettre en œuvre plusieurs modes de fonctionnement afin d'entraîner les rotors 2,3. Par exemple, dans un mode de fonctionnement AEO, le régulateur 14 régule le fonctionnement des moteurs thermiques 11 de sorte que tous les moteurs thermiques 11 sont utilisés et fournissent chacun une puissance mécanique non nulle aux rotors 2,3 de sorte qu'ils fournissent conjointement et de façon sensiblement symétrique la puissance mécanique nécessaire au bon fonctionnement des rotors 2,3 et de l'aéronef 1.

Alternativement, le régulateur 14 peut réguler le fonctionnement des moteurs thermiques 11 de sorte qu'au moins un des moteurs thermiques 11 soit un moteur actif 111 fournissant une puissance mécanique non nulle aux rotors 2,3 dans un mode de fonctionnement économique. Chacun des autres moteurs thermiques 11 de l'installation motrice 10 est un moteur passif 112 ne fournissant alors pas de puissance mécanique aux rotors 2,3 et ne contribuant pas à leurs rotations. Ce mode de fonctionnement économique a pour but de réduire la consommation de carburant de l'installation motrice 10, et par suite de diminuer le coût d'un vol de l'aéronef 1. Le mode de fonctionnement économique est particulièrement destiné au vol de croisière.

Le mode de fonctionnement économique peut permettre de générer des économies financières ou de carburant, d'augmenter la distance franchissable de l'aéronef 1 pour une quantité de carburant donnée, d'augmenter la masse de la charge utile supplémentaire transportée par l'aéronef 1.

Toutefois, le domaine de vol dans lequel le mode de fonctionnement économique est utilisable est limité par plusieurs limitations. Une telle limitation peut comporter un seuil supérieur, un seuil inférieur ou un intervalle à respecter, éventuellement en utilisant des seuils d'hystérésis. Une telle limitation peut aussi être relative à un état particulier. Ces limitations du mode de fonctionnement économique comprennent des limitations fonctionnelles et des limitations sécuritaires.

Ces limitations sécuritaires et fonctionnelles peuvent comporter au moins une limitation de propulsion relative à au moins un paramètre de propulsion, au moins une limitation de vol relative à au moins un paramètre de vol, au moins une limitation opérationnelle relative à au moins un paramètre opérationnel, et au moins une limitation d'environnement relative à au moins un paramètre d'environnement.

De plus, le mode de fonctionnement économique peut comporter un unique mode de fonctionnement. Alternativement, le mode de fonctionnement économique peut comporter au moins deux modes de fonctionnement distincts.

Lorsque le mode de fonctionnement économique comporte au moins deux modes de fonctionnement distincts, des limitations sécuritaires et fonctionnelles spécifiques et distinctes peuvent être associées à chacun de ces de ces modes de fonctionnement pour un même paramètre de fonctionnement.

Par exemple, les limitations de vol peuvent comporter une hauteur de sécurité, qui peut être différente pour chaque mode de fonctionnement économique, en dessous de laquelle l'aéronef 1 ne doit pas voler en mode de fonctionnement économique, ou une vitesse d'avancement minimale, désignée usuellement *Vy,* qui peut être identique pour chaque mode de fonctionnement économique, en dessous de laquelle l'aéronef 1 ne doit pas voler en mode de fonctionnement économique. Des seuils à hystérésis peuvent être utilisés pour ces limitations de vol, par exemple avec un écart de 5% entre les deux seuils. Ces deux limitations de vol sont des limitations sécuritaires.

Les limitations de vol peuvent aussi comporter une attitude maximale de l'aéronef 1, par exemple un angle de tangage maximum et un angle de roulis maximum égaux respectivement à +/-10°. Cette limitation de vol est fonctionnelle. En effet, l'angle de roulis de l'aéronef 1 peut par exemple être augmenté temporairement lors d'un virage, sans remettre en cause la sécurité du vol.

Les limitations de propulsion peuvent comporter des marges minimales par rapport à la puissance réelle que peut fournir un moteur thermique 11 ou que peut transmettre la boîte de transmission mécanique de puissance 12 en dessous desquelles des paramètres de propulsion associés ne doivent pas se situer. Une telle marge minimale est par exemple égale à 1%. Ces deux limitations de propulsion sont des limitations sécuritaires. Les limitations de propulsion sont généralement des limitations sécuritaires, car elles ont un effet direct sur le maintien en vol de l'aéronef 1.

Les limitations d'environnement peuvent comporter une vitesse maximale de vent, qui est une limitation fonctionnelle. Les limitations d'environnement peuvent aussi comporter la présence de pluie ou de neige, la présence d'un trafic important dans la zone du vol. Ces limitations d'environnement sont des limitations sécuritaires.

Les limitations d'environnement peuvent comporter encore le manque de visibilité dont la hiérarchisation peut être laissée à l'appréciation du pilote. En effet, si le vol se déroule en dehors d'une zone de trafic et loin de tout relief ou obstacle, cette limitation peut être une limitation fonctionnelle. Dans le cas contraire, cela peut devenir une limitation sécuritaire. Le paramètre d'environnement relative à la visibilité peut par exemple comporter deux états, à savoir visibilité bonne et une visibilité dégradée, la limitation d'environnement associée étant respectée à l'état « bonne » et non respectée à l'état « dégradée ».

Les limitations opérationnelles peuvent comporter l'état d'équipements de l'aéronef 1, qu'ils soient hydrauliques ou électriques par exemple. Une telle limitation opérationnelle est par exemple respectée lorsqu'un équipement est dans un état normal ou nominal de fonctionnement et non respectée lorsqu'il est endommagé ou en panne. Suivant l'équipement, une telle limitation peut être fonctionnelle et sécuritaire. Par exemple, si cela concerne un dispositif de navigation redondé, et qu'au moins deux sont encore fonctionnels, la limitation peut être fonctionnelle. Mais lorsqu'un seul dispositif reste fonctionnel, la limitation devient sécuritaire.

Les limitations opérationnelles peuvent également comporter une limite supérieure de l'augmentation des valeurs commandées de pas de pales des rotors 2,3, la puissance disponible en mode de fonctionnement économique n'étant pas compatible avec une augmentation supérieure à cette limite. Cette limite supérieure est par exemple égale à 3 degrés par seconde. Des seuils à hystérésis peuvent être appliqués, un écart par exemple de 10% pouvant séparer les deux seuils.

Les limitations opérationnelles peuvent aussi comporter un intervalle relatif à la vitesse d'avancement acceptable dans le mode de fonctionnement économique, la vitesse d'avancement devant se située dans cet intervalle pour que cette limitation soit respectée. Des seuils à hystérésis peuvent être appliqués, un écart par exemple de 2% pouvant séparer les deux seuils.

Par ailleurs, l'aéronef 1 comporte un système 50 de commande d'un mode de fonctionnement économique de l'aéronef 1. Ce système 50 de commande comporte un calculateur 55, une mémoire 56 et un dispositif d'affichage 52, tel un écran, par exemple agencé sur un tableau de bord 17 de l'aéronef 1. Le système 50 de commande peut aussi comporter un haut-parleur 53 et une interface 54 homme-machine. L'interface 54 homme-machine peut comporter tout système pouvant être utilisé par un individu, tel qu'une dalle tactile d'un écran ou un bouton à plusieurs positions par exemple.

Le calculateur 55 du système 50 de commande est relié au régulateur 14, par une liaison filaire ou par une liaison sans fil. Le calculateur 55 est également relié, par une liaison filaire ou par une liaison sans fil, au système avionique 8 et/ou à différents capteurs de l'aéronef 1 afin de recevoir des paramètres de fonctionnement de l'aéronef 1.

Le système 50 de commande permet d'assister le pilote de l'aéronef 1 dans la gestion des modes de fonctionnement et du mode de fonctionnement économique en particulier. Le système 50 de commande est en effet configuré pour mettre en œuvre un procédé de commande d'un mode de fonctionnement économique pour l'aéronef 1.

Dans ce but, la mémoire 56 peut stocker des instructions et/ou un programme d'ordinateur permettant notamment d'exécuter le procédé de commande dont un schéma synoptique est représenté sur la figure 2. Le calculateur 55 du système 50 de commande permet l'exécution de ce procédé.

Le procédé de commande comporte les étapes suivantes.

Tout d'abord, au cours d'une étape de mesure 110, les paramètres de fonctionnement sont mesurés à l'aide des différents capteurs. Les valeurs mesurées de ces paramètres de fonctionnement peuvent être transmises, par une liaison filaire ou sans fil, sous la forme d'un signal électrique ou optique, numérique ou analogique, au calculateur 55. Les valeurs mesurées de ces paramètres de fonctionnement peuvent aussi être transmises à une mémoire pour y être stockées.

Ensuite, au cours d'une étape de comparaison 120, les valeurs mesurées de ces paramètres de fonctionnement sont comparées par le calculateur 55 respectivement avec les limitations sécuritaires et fonctionnelles relatives au mode de fonctionnement économique et associées à ces paramètres afin de vérifier si chaque paramètre de fonctionnement respecte la limitation sécuritaire ou fonctionnelle associée.

Suite à cette comparaison 120 et selon si le mode de fonctionnement économique est utilisé ou non, différentes étapes peuvent être réalisées.

Si une condition C1 relative à l'utilisation du mode de fonctionnement économique est vérifiée et si une condition C2 relative au respect des limitations conclut, suite à la comparaison 120, qu'au moins une limitation fonctionnelle n'est pas respectée alors que les limitations sécuritaires sont respectées, une émission 210 d'une alerte de dépassement des limitations fonctionnelles du mode de fonctionnement économique est émise à l'intention du pilote de l'aéronef 1. Dans ce but, le calculateur 55 envoie un signal numérique ou analogique, optique ou électrique au dispositif émettant cette alerte.

Cette émission 210 d'une telle alerte de dépassement peut comporter une étape d'affichage 211 d'un message sur le dispositif d'affichage 52. Ce message comporte une information relative audit au moins un paramètre de fonctionnement ne respectant pas la limitation fonctionnelle associée. Cette émission 210 d'une telle alerte de dépassement peut aussi comporter une étape d'émission 213 d'un son à l'aide du haut-parleur 53 ou une émission 215 d'une vibration à l'aide d'un dispositif haptique, agencé par exemple sur un levier de commande de pas collectif.

Ainsi, le pilote est informé du non-respect de cette limitation fonctionnelle et peut agir sur les commandes de l'aéronef afin de revenir dans le domaine de vol du mode de fonctionnement économique.

Le pilote peut également, par exemple à l'aide de l'interface 54 homme-machine, commander une sortie manuelle du mode de fonctionnement économique. L'interface 54 homme-machine envoie alors un signal numérique ou analogique, optique ou électrique, porteur d'une telle commande au régulateur 14.

Un démarrage normal 256 du ou des moteurs passifs 112 peut alors être commandé par le régulateur 14 afin de désengager le mode de fonctionnement économique. Ce démarrage normal 256 est réalisée avec une première accélération de ce ou ces moteurs passifs 112 effectuée pendant une première durée jusqu'à ce que ce ou ces moteurs thermiques 11 fournissent une puissance mécanique non nulle aux rotors 2,3, l'installation motrice 10 fournissant alors la puissance mécanique non nulle aux rotors 2,3. L'aéronef 1 se retrouve par exemple alors dans le mode de fonctionnement *AEO.*

Le ou les paramètres de fonctionnement ne respectant pas les limitations fonctionnelles ne sont pas modifiés, mais l'aéronef 1 évolue alors avec plusieurs moteurs thermiques 11 fournissant une puissance mécanique aux rotors 2,3. Le domaine de vol est alors élargi et compatible avec les valeurs de ces paramètres.

Alternativement, un fonctionnement semi-automatique du système 50 de commande peut avoir être préalablement paramétré par le pilote. Dans ce mode de fonctionnement semi-automatique, dès l'émission 210 de l'alerte de dépassement, un démarrage normal 256 du ou des moteurs passifs 112 est automatiquement commandé et réalisé par le régulateur 14.

En outre, si la condition C1 relative à l'utilisation du mode de fonctionnement économique est vérifiée et si la condition C2 relative au respect des limitations conclut, suite à la comparaison 120, qu'au moins une limitation sécuritaire n'est pas respectée, indépendamment du respect des limitations fonctionnelles, un désengagement 250 du mode de fonctionnement économique est réalisé, le calculateur 55 envoyant alors un signal numérique ou analogique, optique ou électrique porteur d'une telle commande au régulateur 14. Au cours de ce désengagement 250, une activation 258 du ou des moteurs passifs 118 est effectuée automatiquement à l'aide du régulateur 14.

Ce désengagement 250 peut comporter un démarrage 255 accéléré du ou des moteurs passifs 112 afin de désengager le mode de fonctionnement économique.

Le démarrage 255 accéléré est effectué à l'aide du régulateur 14 avec une seconde accélération de ce ou de ces moteurs passifs 112, la seconde accélération étant effectuée pendant une seconde durée jusqu'à ce que ce ou ces moteurs thermiques 11 fournissent une puissance mécanique non nulle aux rotors 2,3, la seconde durée étant inférieure à la première durée. Le démarrage 255 accéléré permet ainsi avantageusement de démarrer rapidement le ou les moteurs passifs 112 afin de replacer l'aéronef 1 au plus vite dans un domaine de vol sécurisé.

Par ailleurs, le mode de fonctionnement économique peut, par exemple, comporter deux modes de fonctionnement distincts. Selon un premier mode de fonctionnement, le ou les moteurs passifs 112 sont arrêtés et ne sont pas alimentés en carburant. Selon un second mode de fonctionnement, le ou les moteurs passifs 112 sont démarrés et fonctionnent à un état de ralenti.

Dans ce cas, des domaines de vol spécifiques peuvent être associés respectivement au premier et au second mode de fonctionnement. Le domaine de vol associé au premier mode de fonctionnement est plus restrictif que le domaine de vol associé au second mode de fonctionnement. Les limitations qu'elles soient fonctionnelles ou sécuritaires peuvent alors comporter respectivement des premières limitations relatives au premier mode de fonctionnement et des secondes limitations relatives au second mode de fonctionnement.

Le procédé selon l'invention peut alors comporter des étapes spécifiques à ces deux modes de fonctionnement économique. Par exemple, lorsqu'une condition C3 relative à l'utilisation du premier mode de fonctionnement est vérifiée et si une condition C4 relative au respect des limitations conclut, suite à la comparaison 120, qu'au moins une première limitation fonctionnelle n'est pas respectée alors que les premières limitations sécuritaires sont respectées, une émission 220 d'une alerte de dépassement des premières limitations fonctionnelles est émise à l'intention du pilote de l'aéronef 1. Dans ce but, le calculateur 55 envoie un signal numérique ou analogique, optique ou électrique au dispositif émettant cette alerte.

Ainsi, le pilote est informé du non-respect de cette première limitation fonctionnelle et peut agir sur les commandes de l'aéronef 1 pour revenir dans le domaine de vol relatif au premier mode de fonctionnement. Le pilote peut également agir, par exemple à l'aide de l'interface 54 homme-machine pour commander un engagement 260 du second mode de fonctionnement. Le ou les moteurs passifs 112 arrêtés sont alors démarrés par le régulateur 14, tout en restant passifs, à savoir sans fournir une puissance mécanique aux rotors 2,3. L'interface 54 homme-machine envoie alors un signal numérique ou analogique, optique ou électrique, porteur d'une telle commande au régulateur 14.

Le ou les paramètres de fonctionnement ne respectant pas les premières limitations fonctionnelles ne sont pas modifiés, mais l'aéronef 1 évolue alors dans le second mode de fonctionnement et dans un domaine de vol élargi et compatible avec les valeurs de ces paramètres.

Alternativement, un fonctionnement semi-automatique du système 50 de commande peut avoir être préalablement paramétré par le pilote. Dans ce mode de fonctionnement semi-automatique, dès l'émission 220 de l'alerte de dépassement des premières limitations fonctionnelles, l'engagement 260 du second mode de fonctionnement est commandé et réalisé par le régulateur 14.

De même, lorsque la condition C3 relative à l'utilisation du premier mode de fonctionnement est vérifiée et si la condition C4 relative au respect des limitations conclut, suite à la comparaison 120, qu'au moins une première limitation sécuritaire n'est pas respectée, et que les secondes limitations sécuritaires sont respectées, indépendamment des premières et des secondes limitations fonctionnelles, un engagement 270 du second mode de fonctionnement est réalisée par le régulateur 14. Le ou les moteurs passifs 11 arrêtés sont alors démarrés par le régulateur 14, tout en restant passifs, à savoir sans fournir une puissance mécanique aux rotors 2,3.

Le ou les paramètres de fonctionnement ne respectant pas les premières limitations sécuritaires ne sont pas modifiés, mais l'aéronef 1 évolue alors dans le second mode de fonctionnement et dans un domaine de vol élargi et compatible avec les valeurs de ces paramètres.

Le procédé comporte également d'autres étapes dans le cas où la condition C1 n'est pas vérifiée, à savoir que l'aéronef 1 n'évolue pas dans un mode de fonctionnement économique.

En effet, si la condition C1 n'est pas vérifiée et qu'une condition C5 relative aux respects des limitations qu'elles soient fonctionnelles ou sécuritaires, est vérifiée suite à la comparaison 120, une émission 230 d'une information relative à une disponibilité du mode de fonctionnement économique est réalisée par le calculateur 15.

Cette émission 230 d'une information relative à une disponibilité du mode de fonctionnement économique peut comporter une étape d'affichage 231 d'un message sur le dispositif d'affichage 52. Ce message comporte une information signalant que le mode de fonctionnement économique est opérationnel. Cette émission 230 d'une information relative à une disponibilité du mode de fonctionnement économique peut aussi comporter une étape d'émission 233 d'un son à l'aide du haut-parleur 53 ou une émission 235 d'une vibration à l'aide d'un dispositif haptique, agencé par exemple sur un levier de commande de pas collectif.

Ainsi, le pilote est informé que le mode de fonctionnement économique est utilisable et peut agir, par exemple sur l'interface 54 homme-machine, pour engager ce mode de fonctionnement économique. L'interface 54 homme-machine transmet alors un signal numérique ou analogique, optique ou électrique, porteur d'une information d'engagement du mode de fonctionnement économique au régulateur 14.

Un engagement 300 de ce mode de fonctionnement économique est alors réalisé par le régulateur 14. Cet engagement 300 comporte une première régulation 310 d'au moins un des moteurs thermiques 11 à l'aide du régulateur 14 de sorte qu'il soit un moteur actif 111 et fournisse la puissance mécanique requise aux rotors 2,3, et une seconde régulation 320 d'au moins un autre des moteurs thermiques 11 à l'aide dudit régulateur 14 de sorte qu'il soit un moteur passif 112 et ne fournisse pas de puissance mécanique aux rotors 2,3. Cette seconde régulation 320 peut comporter un arrêt ou une mise au ralenti de cet au moins un autre moteur passif 112.

Alternativement, un fonctionnement semi-automatique du système 50 de commande peut avoir être préalablement paramétré par le pilote. Dans ce mode de fonctionnement semi-automatique, dès l'émission 230 de l'information relative à la disponibilité du mode de fonctionnement économique, un engagement 300 du mode de fonctionnement économique est alors réalisé automatiquement par le régulateur 14.

Par ailleurs, le calculateur 55 peut déterminer à l'aide des paramètres de propulsion, et en particulier des données d'usage relatives aux moteurs thermiques 11 et à la chaîne de transmission mécanique fournies respectivement par les compteurs moteurs et par les compteurs transmission, quel ou quels moteurs thermiques 11 peuvent être un moteur actif 111, et par suite le ou les moteurs thermiques 11 devant être un moteur passif 112. Le calculateur 55 peut transmettre au régulateur 14 des informations relatives d'une part à ce ou ces moteurs thermiques 11 susceptibles d'être un moteur actif 111 fournissant une puissance mécanique non nulle aux rotors 2,3 pour réaliser la première régulation 310, et d'autre part à ce ou ces moteurs thermiques 11 susceptibles d'être un moteur passif 112, ne fournissant aucune puissance mécanique aux rotors 2,3 pour réaliser la seconde régulation 320.

Cette information peut en particulier être utilisée lors de l'étape d'engagement 300 du mode de fonctionnement économique afin de définir à quels moteurs thermiques 11 doivent respectivement être appliquer la première régulation 310 et la seconde régulation 320. Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un autre moyen sans sortir du cadre de la présente invention. L'invention étant définie par les revendications annexées.

## Revendications

1. Procédé de commande d'un mode de fonctionnement économique pour un aéronef (1), ledit aéronef (1) étant muni d'au moins un rotor (2,3) et d'au moins deux moteurs thermiques (11) entraînant en rotation ledit au moins un rotor (2,3), ledit aéronef (1) possédant un régulateur (14) configuré pour réguler lesdits moteurs thermiques (11) selon au moins ledit mode de fonctionnement économique dans lequel au moins un moteur actif (111) parmi lesdits moteurs thermiques (11) fournit une puissance mécanique non nulle audit au moins un rotor (2,3) et au moins un moteur passif (112) parmi lesdits autres moteurs thermiques (11) ne fournit pas de puissance mécanique audit au moins un rotor (2,3),
ledit procédé comportant les étapes suivantes :
- mesure (110) à l'aide de capteurs de paramètres de fonctionnement dudit aéronef (1),
- comparaison (120) à l'aide d'un calculateur (55) desdits paramètres de fonctionnement dudit aéronef (1) avec des limitations sécuritaires et des limitations fonctionnelles relatives audit mode de fonctionnement économique, lesdites limitations sécuritaires ayant un effet direct sur la sécurité d'un vol dudit aéronef (1), lesdites limitations fonctionnelles ayant un effet sur le fonctionnement dudit aéronef (1) et/ou sur l'efficacité dudit mode de fonctionnement économique,
- si ledit aéronef (1) est dans ledit mode de fonctionnement économique et qu'au moins une desdites limitations fonctionnelles n'est pas respectée et que lesdites limitations sécuritaires sont respectées, émission (210) d'une alerte de dépassement desdites limitations fonctionnelles dudit mode de fonctionnement économique, et
- si ledit aéronef (1) est dans ledit mode de fonctionnement économique et qu'au moins une desdites limitations sécuritaires n'est pas respectée, désengagement (250) automatique dudit mode de fonctionnement économique, ledit désengagement (250) automatique comportant une activation (258) dudit au moins un moteur passif (112) à l'aide dudit régulateur (14),
**caractérisé en ce que**,
ledit procédé comporte un démarrage normal (256) et un démarrage accéléré (255) dudit au moins un moteur passif (112) dans ledit mode de fonctionnement économique,
ledit démarrage normal (256) comportant une première accélération pendant une première durée dudit au moins un moteur passif (112), jusqu'à ce qu'il fournisse une puissance mécanique non nulle audit au moins un rotor (2,3),
ledit démarrage accéléré (255) comportant une seconde accélération pendant une seconde durée dudit au moins un moteur passif (112), jusqu'à ce qu'il fournisse une puissance mécanique non nulle audit au moins un rotor (2,3), ladite seconde durée étant inférieure à ladite première durée,
ledit démarrage normal (256) étant effectué suite à ladite émission (210) d'une alerte de dépassement desdites limitations fonctionnelles dudit mode de fonctionnement économique et si un pilote dudit aéronef (1) autorise un désengagement dudit mode de fonctionnement économique à l'aide d'une interface (54),
ledit démarrage accéléré (255) étant effectué lors de ladite activation (258).

2. Procédé selon la revendication 1,
pour lequel si ledit aéronef (1) n'est pas dans ledit mode de fonctionnement économique et que lesdites limitations sécuritaires et fonctionnelles sont respectées par lesdits paramètres de fonctionnement, ledit procédé comporte une émission (230) d'une information relative à une disponibilité dudit mode de fonctionnement économique.

3. Procédé selon la revendication 1,
pour lequel si ledit aéronef (1) n'est pas dans ledit mode de fonctionnement économique et que lesdites limitations sécuritaires et fonctionnelles sont respectées par lesdits paramètres de fonctionnement, ledit procédé comporte un engagement (300) dudit mode de fonctionnement économique, ledit engagement (300) comportant une première régulation (310) d'au moins un desdits moteurs thermiques (11) à l'aide dudit régulateur (14) de sorte qu'il soit un moteur actif (111), et une seconde régulation (320) d'au moins un autre desdits moteurs thermiques (11) à l'aide dudit régulateur (14) afin qu'il soit un moteur passif (112), ladite seconde régulation (320) comportant un arrêt ou une mise au ralenti dudit au moins un autre desdits moteurs thermiques (11).

4. Procédé selon la revendication 3,
pour lequel ledit calculateur (55) détermine ledit au moins un moteur actif (111) et ledit au moins un moteur passif (112) parmi lesdits moteurs thermiques (11) dans ledit mode de fonctionnement économique, ledit calculateur (55) transmettant audit régulateur (14) des informations relatives audit au moins un moteur actif (111) pour ladite première régulation (310) et audit au moins un moteur passif (111) pour ladite seconde régulation (320).

5. Procédé selon l'une quelconque des revendications 1 à 4,
pour lequel ladite émission (210) d'une alerte de dépassement desdites limitations fonctionnelles dudit mode de fonctionnement économique comporte une étape d'affichage (211) d'un message sur un dispositif d'affichage (52) dudit aéronef (1), ledit message comportant une information relative audit au moins un paramètre de fonctionnement ne respectant pas ladite limitation fonctionnelle associée.

6. Procédé selon l'une quelconque des revendications 1 à 5,
pour lequel lesdits paramètres de fonctionnement dudit aéronef (1) comportent au moins deux paramètres dont :
- des paramètres de propulsion relatifs à un ensemble (9) dudit aéronef (1), ledit ensemble (9) comportant lesdits moteurs thermiques (11), ledit au moins un rotor (2,3), et une chaîne de transmission mécanique (45) reliant mécaniquement lesdits moteurs thermiques (11) et ledit au moins un rotor (2,3), lesdits paramètres de propulsion étant choisis parmi des couples et des vitesses de rotation au niveau d'organes tournants desdits moteurs thermiques (11), un couple et une vitesse de rotation d'un mât dudit au moins un rotor (2,3), des couples et des vitesses de rotation d'organes tournants de ladite chaîne de transmission mécanique (45), des températures internes desdits moteurs thermiques (11), des marges par rapport à des performances desdits moteurs thermiques (11), des compteurs moteur associés auxdits moteurs thermiques (11), chaque compteur moteur comptabilisant une donnée d'usage d'un desdits moteurs thermiques (11), et des compteurs transmission associés respectivement à des arbres (13) de ladite chaîne de transmission mécanique (45) reliés mécaniquement respectivement auxdits moteurs thermiques (11), chaque compteur transmission comptabilisant une donnée d'usage d'un desdits arbres (13),
- des paramètres de vol dudit aéronef (1) choisis parmi une vitesse d'avancement, une vitesse ascensionnelle, une altitude, une attitude, une hauteur par rapport au sol survolé (1),
- des paramètres opérationnels dudit aéronef (1), lesdits paramètres opérationnels étant choisis parmi des valeurs commandées de pas de pales dudit au moins un rotor (2,3), une vitesse d'avancement acceptable dudit aéronef (1) dans le mode de fonctionnement économique, un état d'équipements dudit aéronef (1), ledit état comportant au moins deux états parmi un état de fonctionnement « normal », un état « arrêté », un état « présence d'un dysfonctionnement » relatif audit équipement, et
- des paramètres d'environnement relatifs à des conditions de trafic autour dudit aéronef (1) et à des conditions météorologiques extérieures audit aéronef (1).

7. Procédé selon la revendication 6,
pour lequel lesdites limitations sécuritaires et lesdites limitations fonctionnelles comportent conjointement :
- au moins une limitation de propulsion relative à au moins un desdits paramètres de propulsion,
- au moins une limitation de vol relative à au moins un desdits paramètres de vol,
- au moins une limitation opérationnelle relative à au moins un desdits paramètres opérationnels, et
- au moins une limitation d'environnement relative à au moins un desdits paramètres d'environnement.

8. Procédé selon l'une quelconque des revendications 1 à 7,
pour lequel ledit mode de fonctionnement économique comporte un premier mode de fonctionnement pour lequel ledit au moins un moteur passif (112) est arrêté et non alimenté en carburant et un second mode de fonctionnement pour lequel ledit au moins un moteur passif (112) est démarré et alimenté en carburant.

9. Procédé selon la revendication 8,
pour lequel au moins une desdites limitations fonctionnelles comporte une première limitation fonctionnelle relative audit premier mode de fonctionnement et une seconde limitation fonctionnelle relative audit second mode de fonctionnement, ladite première limitation fonctionnelle et ladite seconde limitation fonctionnelle étant associées à un même paramètre de fonctionnement, et, si ledit aéronef (1) est dans ledit premier mode de fonctionnement et qu'au moins une desdites premières limitations fonctionnelles n'est pas respectée et que lesdites secondes limitations fonctionnelles sont respectées, ledit procédé comporte :
- émission (220) d'une alerte de dépassement desdites premières limitations fonctionnelles dudit premier mode de fonctionnement, ou
- engagement (260) dudit second mode de fonctionnement si une interface (54) a été actionnée par un pilote dudit aéronef (1), ledit engagement (260) comportant un démarrage (265) à l'aide dudit régulateur (14) dudit au moins un moteur passif (112) sans qu'il fournisse de puissance mécanique audit au moins un rotor (2,3), ou
- émission (220) d'une alerte de dépassement desdites premières limitations fonctionnelles dudit mode de fonctionnement économique, et, engagement (260) dudit second mode de fonctionnement si ladite interface (54) est actionnée par ledit pilote.

10. Procédé selon l'une quelconque des revendications 8 à 9,
pour lequel au moins une desdites limitations sécuritaires comporte une première limitation sécuritaire relative audit premier mode de fonctionnement et une seconde limitation sécuritaire relative audit second mode de fonctionnement, ladite première limitation sécuritaire et ladite seconde limitation sécuritaire étant associées à un même paramètre de fonctionnement, et ledit procédé comporte l'étape complémentaire suivante :
- si ledit aéronef (1) est dans ledit premier mode de fonctionnement et qu'au moins une desdites premières limitations sécuritaires n'est pas respectée et que lesdites secondes limitations sécuritaires sont respectées, engagement (270) dudit second mode de fonctionnement, ledit engagement (270) comportant un démarrage (275) à l'aide dudit régulateur (14) dudit au moins un moteur passif (11), sans qu'il fournisse de puissance mécanique audit au moins un rotor (2,3).

11. Procédé selon l'une quelconque des revendications 1 à 10,
pour lequel ledit régulateur (14) comporte autant de contrôleurs moteur (15) que ledit aéronef (1) comporte de moteurs thermiques (11).

12. Programme d'ordinateur comprenant des instructions qui, lorsque ledit programme est exécuté, conduisent à mettre en œuvre le procédé selon l'une quelconque des revendications 1 à 11.

13. Système (50) de commande d'un mode de fonctionnement économique pour un aéronef (1) muni d'au moins un rotor (2,3) et d'au moins deux moteurs thermiques (11) entraînant en rotation ledit au moins un rotor (2,3), ledit aéronef (1) possédant un régulateur (14) configuré pour réguler lesdits moteurs thermiques (11) selon au moins ledit mode de fonctionnement économique dans lequel au moins un moteur actif (111) parmi lesdits moteurs thermiques (11) fournit une puissance mécanique audit au moins un rotor (2,3) et au moins un moteur passif (112) parmi lesdits autres moteurs thermiques (11) ne fournit pas de puissance mécanique audit au moins un rotor (2,3), ledit système (50) comportant :
- au moins un calculateur (55), et
- au moins une mémoire (56) stockant au moins une base de données,
**caractérisé en ce que** ledit système (50) de commande d'un mode de fonctionnement économique est configuré pour mettre en œuvre le procédé selon l'une quelconque des revendications 1 à 11.

14. Aéronef (1),
**caractérisé en ce que** ledit aéronef (1) comporte un système (50) de commande d'un mode de fonctionnement économique selon la revendication 13.

## Patentansprüche

1. Verfahren zum Steuern eines wirtschaftlichen Betriebsmodus für ein Luftfahrzeug (1), wobei das Luftfahrzeug (1) mit mindestens einem Rotor (2, 3) und mindestens zwei den mindestens einen Rotor (2, 3) drehantreibenden Verbrennungsmotoren (11) ausgestattet ist, wobei das Luftfahrzeug (1) einen Regler (14) aufweist, der konfiguriert ist, um die Verbrennungsmotoren (11) in mindestens dem wirtschaftlichen Betriebsmodus zu regeln, in dem mindestens ein aktiver Motor (111) unter den Verbrennungsmotoren (11) eine von Null verschiedene mechanische Leistung an den mindestens einen Rotor (2, 3) liefert und mindestens ein passiver Motor (112) unter den übrigen Verbrennungsmotoren (11) keine mechanische Leistung an den mindestens einen Rotor (2, 3) liefert,
wobei das Verfahren die folgenden Schritte umfasst:
- Messen (110) von Betriebsparametern des Luftfahrzeugs (1) mit Hilfe von Sensoren,
- Vergleichen (120) der Betriebsparameter des Luftfahrzeugs (1) mit den wirtschaftlichen Betriebsmodus betreffenden Sicherheitsbeschränkungen und Funktionsbeschränkungen mit Hilfe eines Rechners (55), wobei die Sicherheitsbeschränkungen einen direkten Einfluss auf die Flugsicherheit des Luftfahrzeugs (1) haben und die Funktionsbeschränkungen einen Einfluss auf den Betrieb des Luftfahrzeugs (1) und/oder auf die Effizienz des wirtschaftlichen Betriebsmodus haben,
- wenn sich das Luftfahrzeug (1) in dem wirtschaftlichen Betriebsmodus befindet und mindestens eine der Funktionsbeschränkungen nicht eingehalten wird und die Sicherheitsbeschränkungen eingehalten werden, Ausgeben (210) einer Warnung, dass die Funktionsbeschränkungen des wirtschaftlichen Betriebsmodus überschritten sind, und
- wenn sich das Luftfahrzeug (1) in dem wirtschaftlichen Betriebsmodus befindet und mindestens eine der Sicherheitsbeschränkungen nicht eingehalten wird, automatisches Deaktivieren (250) des wirtschaftlichen Betriebsmodus, wobei das automatische Deaktivieren (250) ein Aktivieren (258) des mindestens einen passiven Motors (112) mit Hilfe des Reglers (14) umfasst,
**dadurch gekennzeichnet, dass**
das Verfahren einen normalen Start (256) und einen beschleunigten Start (255) des mindestens einen im wirtschaftlichen Betriebsmodus passiven Motors (112) umfasst,
wobei der normale Start (256) eine erste Beschleunigung des mindestens einen passiven Motors (112) während einer ersten Zeitspanne umfasst, bis dieser eine von Null verschiedene mechanische Leistung an den mindestens einen Rotor (2, 3) liefert,
wobei der beschleunigte Start (255) eine zweite Beschleunigung des mindestens einen passiven Motors (112) während einer zweiten Zeitspanne umfasst, bis dieser eine von Null verschiedene mechanische Leistung an den mindestens einen Rotor (2, 3) liefert, wobei die zweite Zeitspanne kürzer ist als die erste Zeitspanne,
wobei der normale Start (256) nach dem Ausgeben (210) einer Warnung über das Überschreiten der Funktionsbeschränkungen des wirtschaftlichen Betriebsmodus erfolgt und wenn ein Pilot des Flugzeugs (1) über eine Schnittstelle (54) das Verlassen des wirtschaftlichen Betriebsmodus genehmigt,
wobei der beschleunigte Start (255) beim Aktivieren (258) durchgeführt wird.

2. Verfahren nach Anspruch 1,
bei dem, wenn sich das Luftfahrzeug (1) nicht im wirtschaftlichen Betriebsmodus befindet und die Sicherheits- und Funktionsbeschränkungen durch die Betriebsparameter eingehalten werden, das Verfahren ein Ausgeben (230) einer Information über eine Verfügbarkeit des wirtschaftlichen Betriebsmodus umfasst.

3. Verfahren nach Anspruch 1,
bei dem, wenn sich das Luftfahrzeug (1) nicht in dem wirtschaftlichen Betriebsmodus befindet und die Sicherheits- und Funktionsbeschränkungen durch die Betriebsparameter eingehalten werden, das Verfahren ein Aktivieren (300) des wirtschaftlichen Betriebsmodus umfasst, wobei das Aktivieren (300) ein erstes Regeln (310) mindestens eines der Verbrennungsmotoren (11) mit Hilfe des Reglers (14), so dass er ein aktiver Motor (111) ist, und ein zweites Regeln (320) mindestens eines weiteren der Verbrennungsmotoren (11) mit Hilfe des Reglers (14), so dass er ein passiver Motor (112) ist, umfasst, wobei das zweite Regeln (320) ein Abschalten oder einen Leerlauf des mindestens einen weiteren der Verbrennungsmotoren (11) umfasst.

4. Verfahren nach Anspruch 3,
bei dem der Rechner (55) den mindestens einen aktiven Motor (111) und den mindestens einen passiven Motor (112) unter den Verbrennungsmotoren (11) in dem wirtschaftlichen Betriebsmodus bestimmt, wobei der Rechner (55) Informationen über den mindestens einen aktiven Motor (111) für das erste Regeln (310) und über den mindestens einen passiven Motor (111) für das zweite Regeln (320) an den Regler (14) übermittelt.

5. Verfahren nach einem der Ansprüche 1 bis 4,
bei dem das Ausgeben (210) einer Warnung über das Überschreiten der Funktionsbeschränkungen des wirtschaftlichen Betriebsmodus einen Schritt des Anzeigens (211) einer Meldung auf einer Anzeigevorrichtung (52) des Luftfahrzeugs (1) umfasst, wobei die Meldung eine Information über den mindestens einen Betriebsparameter umfasst, der die zugeordnete Funktionsbeschränkung nicht einhält.

6. Verfahren nach einem der Ansprüche 1 bis 5,
bei dem die Betriebsparameter des Luftfahrzeugs (1) mindestens zwei Parameter umfassen, darunter:
- Antriebsparameter, die eine Baugruppe (9) des Luftfahrzeugs (1) betreffen, wobei die Baugruppe (9) die Verbrennungsmotoren (11), den mindestens einen Rotor (2, 3) und einen mechanischen Antriebsstrang (45) umfasst, der die Verbrennungsmotoren (11) und den mindestens einen Rotor (2, 3) mechanisch verbindet, wobei die Antriebsparameter aus Drehmomenten und Drehzahlen an rotierenden Teilen der Verbrennungsmotoren (11), einem Drehmoment und einer Drehzahl eines Mastes des mindestens einen Rotors (2,3), Drehmomenten und Drehzahlen von rotierenden Elementen des mechanischen Antriebsstrangs (45), Innentemperaturen der Verbrennungsmotoren (11), Toleranzen in Bezug auf die Leistung der Verbrennungsmotoren (11), den Verbrennungsmotoren (11) zugeordneten Motorzählern, wobei jeder Motorzähler einen Betriebswert eines der besagten Verbrennungsmotoren (11) erfasst, und Getriebezähler umfasst, die jeweils Wellen (13) des mechanischen Antriebsstrangs (45) zugeordnet sind, die mechanisch mit den Verbrennungsmotoren (11) verbunden sind, wobei jeder Getriebezähler einen Betriebswert einer der Wellen (13) erfasst,
- Flugparameter des Flugzeugs (1), ausgewählt aus einer Vorwärtsgeschwindigkeit, einer Steiggeschwindigkeit, einer Höhe, einer Fluglage, einer Höhe über dem überflogenen Boden (1),
- Betriebsparameter des Flugzeugs (1), wobei die Betriebsparameter ausgewählt sind aus Sollwerten für die Blattstellung des mindestens einen Rotors (2, 3), einer akzeptablen Vorwärtsgeschwindigkeit des Luftfahrzeugs (1) im wirtschaftlichen Betriebsmodus, einem Zustand von Einrichtungen des Luftfahrzeugs (1), wobei der Zustand in Bezug auf die Einrichtung mindestens zwei Zustände aus einem Betriebszustand "normal", einem Zustand "stillstehend" und einem Zustand "Vorliegen einer Störung" umfasst, und
- Umgebungsparameter, die sich auf die Verkehrsbedingungen um das Luftfahrzeug (1) und auf die Wetterbedingungen außerhalb des Luftfahrzeugs (1) beziehen.

7. Verfahren nach Anspruch 6,
bei dem die Sicherheitsbeschränkungen und die Funktionsbeschränkungen zusammen umfassen:
- mindestens eine Antriebsbeschränkung in Bezug auf mindestens einen der Antriebsparameter,
- mindestens eine Flugbeschränkung in Bezug auf mindestens einen der Flugparameter,
- mindestens eine Betriebsbeschränkung in Bezug auf mindestens einen der Betriebsparameter und
- mindestens eine Umgebungsbeschränkung in Bezug auf mindestens einen der Umgebungsparameter.

8. Verfahren nach einem der Ansprüche 1 bis 7,
bei dem der wirtschaftliche Betriebsmodus einen ersten Betriebsmodus, bei dem der mindestens eine passive Motor (112) abgeschaltet und nicht mit Kraftstoff versorgt ist, und einen zweiten Betriebsmodus umfasst, bei dem der mindestens eine passive Motor (112) gestartet und mit Kraftstoff versorgt ist.

9. Verfahren nach Anspruch 8,
bei dem mindestens eine der Funktionsbeschränkungen eine den ersten Betriebsmodus betreffende erste Funktionsbeschränkung und eine den zweiten Betriebsmodus betreffende zweite Funktionsbeschränkung umfasst, wobei die erste Funktionsbeschränkung und die zweite Funktionsbeschränkung einem gleichen Betriebsparameter zugeordnet sind, und, wenn sich das Flugzeug (1) im ersten Betriebsmodus befindet und mindestens eine der ersten Funktionsbeschränkungen nicht eingehalten wird und die zweiten Funktionsbeschränkungen eingehalten werden, das Verfahren umfasst:
- Ausgeben (220) einer Warnung, dass die ersten Funktionsbeschränkungen des ersten Betriebsmodus überschritten wurden, oder
- Aktivieren (260) des zweiten Betriebsmodus, wenn eine Schnittstelle (54) von einem Piloten des Luftfahrzeugs (1) betätigt wurde, wobei das Aktivieren (260) einen Start (265) des mindestens einen passiven Triebwerks (112) mit Hilfe des Reglers (14) umfasst, ohne dass dieser dem mindestens einen Rotor (2, 3) mechanische Leistung zuführt, oder
- Ausgeben (220) einer Warnung über das Überschreiten der ersten Funktionsbeschränkungen des wirtschaftlichen Betriebsmodus und Aktivieren (260) des zweiten Betriebsmodus, wenn die Schnittstelle (54) vom Piloten betätigt wird.

10. Verfahren nach einem der Ansprüche 8 bis 9,
bei dem mindestens eine der Sicherheitsbegrenzungen eine den ersten Betriebsmodus betreffende erste Sicherheitsbegrenzung und eine den zweiten Betriebsmodus betreffende zweite Sicherheitsbegrenzung umfasst, wobei die erste Sicherheitsbegrenzung und die zweite Sicherheitsbegrenzung einem gleichen Betriebsparameter zugeordnet sind, und das Verfahren den folgenden zusätzlichen Schritt umfasst:
- wenn sich das Flugzeug (1) im ersten Betriebsmodus befindet und mindestens eine der ersten Sicherheitsbeschränkungen nicht eingehalten wird und die zweiten Sicherheitsbeschränkungen eingehalten werden, Aktivieren (270) des zweiten Betriebsmodus, wobei das Aktivieren (270) ein Starten (275) des mindestens einen passiven Motors (11) mit Hilfe des Reglers (14) umfasst, ohne dass dieser mechanische Leistung an den mindestens einen Rotor (2, 3) liefert.

11. Verfahren nach einem der Ansprüche 1 bis 10,
bei dem der Regler (14) so viele Motorsteuerungen (15) umfasst, wie das Luftfahrzeug (1) Verbrennungsmotoren (11) umfasst.

12. Computerprogramm mit Befehlen, die bei Ausführung des Programms zur Durchführung des Verfahrens nach einem der Ansprüche 1 bis 11 führen.

13. System (50) zur Steuerung eines wirtschaftlichen Betriebsmodus für ein Luftfahrzeug (1), das mit mindestens einem Rotor (2, 3) und mindestens zwei den mindestens einen Rotor (2, 3) drehantreibenden Verbrennungsmotoren (11) ausgestattet ist, wobei das Luftfahrzeug (1) einen Regler (14) aufweist, der konfiguriert ist, um die Verbrennungsmotoren (11) in mindestens dem wirtschaftlichen Betriebsmodus zu regeln, in dem mindestens ein aktiver Motor (111) unter den Verbrennungsmotoren (11) mechanische Leistung an den mindestens einen Rotor (2, 3) liefert und mindestens ein passiver Motor (112) unter den übrigen Verbrennungsmotoren (11) keine mechanische Leistung an den mindestens einen Rotor (2, 3) liefert, wobei das System (50) umfasst:
- mindestens einen Rechner (55) und
- mindestens einen Speicher (56), der mindestens eine Datenbank speichert,
**dadurch gekennzeichnet, dass** das System (50) zur Steuerung eines wirtschaftlichen Betriebsmodus konfiguriert ist, um das Verfahren nach einem der Ansprüche 1 bis 11 durchzuführen.

14. Luftfahrzeug (1),
**dadurch gekennzeichnet, dass** das Luftfahrzeug (1) ein System (50) zur Steuerung eines wirtschaftlichen Betriebsmodus gemäß Anspruch 13 umfasst.

## Claims

1. Method for controlling an economy operating mode for an aircraft (1), said aircraft (1) being provided with at least one rotor (2,3) and at least two heat engines (11) rotating said at least one rotor (2,3), said aircraft (1) having a controller (14) configured to control said heat engines (11) in at least said economy operating mode wherein at least one active engine (111) from among said heat engines (11) supplies non-zero mechanical power to said at least one rotor (2,3) and at least one passive engine (112) from among said other heat engines (11) does not supply mechanical power to said at least one rotor (2,3),
said method comprising the following steps:
- measuring (11) operating parameters of said aircraft (1) by means of sensors,
- using a calculator (55) to compare (120) said operating parameters of said aircraft (1) with safety limitations and functional limitations relating to said economy operating mode, said safety limitations having a direct effect on the safety of the flight of said aircraft (1), said functional limitations having an effect on the operation of said aircraft (1) and/or on the effectiveness of said economy operating mode,
- if said aircraft (1) is in said economy operating mode and at least one of said functional limitations is not being respected and said safety limitations are being respected, issuing (210) an alert indicating that said functional limitations of said economy operating mode have been exceeded, and
- if said aircraft (1) is in said economy operating mode and at least one of said safety limitations is not being respected, automatically disengaging (250) said economy operating mode, said automatic disengagement (250) comprising activation (258) of said at least one passive engine (112) by means of said controller (14),
**characterised in that**
said method comprises normal starting (256) and accelerated starting (255) of said at least one passive engine (112) in said economy operating mode,
said normal starting (256) comprising a first acceleration of said at least one passive engine (112) for a first time period, until it supplies non-zero mechanical power to said at least one rotor,
said accelerated starting (255) comprising a second acceleration of said at least one passive engine (112) for a second time period, until it supplies non-zero mechanical power to said at least one rotor (2,3), said second time period being shorter than said first time period,
said normal starting (256) taking place following the issuing (210) of an alert indicating that said functional limitations of said economy operating mode have been exceeded and if a pilot of said aircraft (1) authorises the disengagement of said economy operating mode by means of an interface (54),
said accelerated starting (255) being carried out upon said activation (258).

2. Method according to claim 1,
wherein, if said aircraft (1) is not in said economy operating mode and said safety and functional limitations are being respected by said operating parameters, said method comprises issuing (230) information relating to the availability of said economy operating mode.

3. Method according to claim 1,
wherein, if said aircraft (1) is not in said economy operating mode and said safety and functional limitations are being respected by said operating parameters, said method comprises engaging (300) said economy operating mode, said engagement (300) comprising a first control (310) of at least one of said heat engines (11) by means of said controller (14) so that it is an active engine (111), and a second control (320) of at least one other of said heat engines (11) by means of said controller (14) in order for it to be a passive engine (112), said second control (320) comprising stopping or idling said at least one other of said heat engines (11).

4. Method according to claim 3,
wherein said calculator (55) determines said at least one active engine (111) and said at least one passive engine (112) from among said heat engines (11) in said economy operating mode, said calculator (55) transmitting information to said controller (14) relating to said at least one active engine (111) for said first control (310) and to said at least one passive engine (111) for said second control (320).

5. Method according to any one of claims 1 to 4,
wherein said issuing (210) of an alert indicating that said functional limitations of said economy operating mode have been exceeded comprises a step of displaying (211) a message on a display device (52) of said aircraft (1), said message comprising information relating to said at least one operating parameter that does not respect said associated functional limitation.

6. Method according to any one of claims 1 to 5,
wherein said operating parameters of said aircraft (1) comprise at least two parameters, including:
- propulsion parameters relating to an assembly (9) of said aircraft (1), said assembly (9) comprising said heat engines (11), said at least one rotor (2,3), and a mechanical transmission channel (45) mechanically connecting said heat engines (11) and said at least one rotor (2,3), said propulsion parameters being chosen from torques and speeds of rotation at rotating members of said heat engines (11), a torque and a speed of rotation of a mast of said at least one rotor (2,3), torques and speeds of rotation of rotating members of said mechanical transmission channel (45), internal temperatures of said heat engines (11), margins relating to performances of said heat engines (11), engine counters associated with said heat engines (11), each engine counter counting an item of usage data of one of said heat engines (11), and transmission counters associated respectively with shafts (13) of said mechanical transmission channel (45) mechanically connected respectively to said heat engines (11), each transmission counter counting an item of usage data of one of said shafts (13),
- flight parameters of said aircraft (1) chosen from a forward speed, a rate of climb, an altitude, an attitude, a height in relation to the overflown ground (1),
- operational parameters of said aircraft (1), said operational parameters being chosen from controlled pitch values of blades of said at least one rotor (2,3), an acceptable forward speed of said aircraft (1) in the economy operating mode, a state of equipment of said aircraft (1), said state comprising at least two states from a "normal" operating state, a "stopped" state or a "malfunction present" state relating to said equipment, and
- environmental parameters relating to traffic conditions around said aircraft (1) and to weather conditions outside said aircraft (1).

7. Method according to claim 6,
wherein said safety limitations and said functional limitations together comprise:
- at least one propulsion limitation relating to at least one of said propulsion parameters,
- at least one flight limitation relating to at least one of said flight parameters,
- at least one operational limitation relating to at least one of said operational parameters, and
- at least one environmental limitation relating to at least one of said environmental parameters.

8. Method according to any one of claims 1 to 7,
wherein said economy operating mode comprises a first operating mode wherein said at least one passive engine (112) is stopped and not supplied with fuel and a second operating mode wherein said at least one passive engine (112) is started and supplied with fuel.

9. Method according to claim 8,
wherein at least one of said functional limitations comprises a first functional limitation relating to said first operating mode and a second functional limitation relating to said second operating mode, said first functional limitation and said second functional limitation being associated with the same operating parameter, and, if said aircraft (1) is in said first operating mode and at least one of said first functional limitations is not being respected and said second functional limitations are being respected, said method comprises:
- issuing (220) an alert indicating that said first functional limitations of said first operating mode have been exceeded, or
- engaging (260) said second operating mode if an interface (54) has been actuated by a pilot of said aircraft (1), said engagement (260) comprising starting said at least one passive engine (112) by means of said controller (14) without it supplying mechanical power to said at least one rotor, or
- issuing (220) an alert indicating that said first functional limitations of said economy operating mode limitations have been exceeded, and engaging (260) said second operating mode if said interface (54) is actuated by said pilot.

10. Method according to any one of claims 8 to 9,
wherein at least one of said safety limitations comprises a first safety limitation relating to said first operating mode and a second safety limitation relating to said second operating mode, said first safety limitation and said second safety limitation being associated with the same operating parameter, and said method comprises the following additional step:
- if the aircraft (1) is in said first operating mode and at least one of said first safety limitations is not being respected and said second safety limitations are being respected, engaging (270) said second operating mode, said engagement (270) comprising starting said at least one passive engine (11) by means of said controller (14), without it supplying mechanical power to said at least one rotor (2,3).

11. Method according to any one of claims 1 to 10,
wherein said controller (14) comprises as many engine controllers (15) as said aircraft (1) comprises heat engines (11).

12. Computer program comprising instructions that, when said program is run, cause the method according to any one of claims 1 to 11 to be implemented.

13. System (50) for controlling an economy operating mode for an aircraft (1) provided with at least one rotor (2,3) and at least two heat engines (11) rotating said at least one rotor (2,3), said aircraft (1) having a controller (14) configured to control said heat engines (11) in at least said economy operating mode wherein at least one active engine (11) from among said heat engines (11) supplies mechanical power to said at least one rotor (2,3) and at least one passive engine (112) from among said other heat engines (11) does not supply mechanical power to said at least one rotor (2,3), said system comprising:
- at least one calculator (55), and
- at least one memory (56) storing at least one database,
**characterised in that** said system (50) for controlling an economy operating mode is configured to implement the method according to any one of claims 1 to 11.

14. Aircraft (1),
**characterised in that** said aircraft (1) comprises a system (50) for controlling an economy operating mode according to claim 13.
